# EUROPEAN PATENT APPLICATION

(11) **EP 4 353 668 A1**
(43) Date of publication of application: **17.04.2024**
(21) Application number: 23202661.7
(22) Date of filing: 10.10.2023
(51) Int. Cl.: B66F 9/075, B60D 1/00

(54) **INDUSTRIAL WORK VEHICLE**

(30) Priority: 11.10.2022 IT 202200020853
(71) Applicant: Toyota Material Handling Manufacturing Italy S.p.A, 40132 Bologna (IT)
(72) Inventor: BREVINO, Raffaele, 40050 CASTELLO D'ARGILE (BOLOGNA) (IT)
(74) Representative: Casadei, Barbara

(57) **Abstract**

Described is a lift truck (100), comprising a main frame defining a front portion and a rear portion (101) and a hooking device (1) in turn comprising a plate (2), designed to be fixed to the lift truck (100), and a coupling arm (3) hinged or which can be hinged to the plate (2). The coupling arm (3) is designed in such a way as to pass between an operating configuration, wherein it is transversal to the plate (2) and can be coupled to a trailer, and a rest configuration wherein it is parallel to the plate (2). The hooking device (1) also comprises an actuator (4) operatively connected to the coupling arm (3) and a control unit. The control unit is configured for sending a control signal to the actuator (4) for moving the coupling arm (3) between the rest configuration and the operating configuration.

## Description

This invention relates to an industrial work vehicle, preferably a lift truck, comprising a hooking device.

For this reason, the invention applies to the sector of industrial work vehicles comprising a hooking device for transporting a trailer. The term "trailer" means a vehicle without a motor configured for being towed.

The lift trucks find widespread use in production chains, in warehouses, but also, for example, in ports, airports and interports.

Such lift trucks are mainly used for lifting loads and/or moving them from one point to another of a factory, or for example a shed, or along a production chain.

A possible malfunction of the lift trucks would cause a slowing down of the production system or, in the worst cases, a stoppage.

Moreover, any malfunctions can result in risks with regard to possible damage to other objects and machinery and especially for the safety and protection of the operators.

In order to qualify the safety level of a machine or a device it is common practice in the industrial sector to refer to the so-called Performance Level. In the industrial sector, lift trucks, especially if self-driving, are sought to be brought to a high Performance Level value, that is to say, architectures are used to guarantee safety functions in the event of a malfunction, minimising the immediate risk due to faults.

These Performance Levels are defined by manufacturers according to regulatory standards.

Amongst the possible causes of accidents of the tractor-trailer there is the so-called "jack-knife" phenomenon, that is to say, a relative "scissor-like" rotation between a tractor-trailer and a trailer due to excessive inertia of the trailer which discharges its kinetic energy against the tractor-trailer causing the loss of trajectory and consequent ungovernability.

The "jackknifing" can be triggered in a variety of situations, such as, for example, sharp braking along a bend, braking along a bend performed on a slope and/or in low adherence conditions due, for example, to wet or icy asphalt.

There are currently towing systems in the prior art consisting mainly of a plate which can be connected to the lift truck and a pin for coupling the trailer to the vehicle.

The tow pins or hooks on the market comprise an opening and a closing which is mainly manual and cannot be actuated remotely.

The attachment devices currently in use are of the fixed type, that is to say, their size remains unchanged.

Disadvantageously, the fixed overall dimensions leads to an increase in risks and a limitation of the lift trucks as regards the movements and the ease of the manoeuvres.

For example, the presence of the trailer, when coupled to the lift truck, leads to problems during the braking operations, or particular manoeuvres such as turns, if the lift truck exceeds a predetermined speed.

The technical purpose of the invention is therefore to provide a lift truck comprising a hooking device which is able to overcome the drawbacks of the prior art.

The aim of the invention is therefore to provide a lift truck comprising a hooking device which allows the overall dimensions to be reduced or eliminated.

A further aim of the invention is to provide a lift truck comprising a hooking device which allows an improved manoeuvrability of the vehicle when attached to the trailer.

The technical purpose indicated and the aims specified are substantially achieved by a lift truck comprising a hooking device comprising the technical features described in one or more of the appended claims. The dependent claims correspond to possible embodiments of the invention.

In particular, the technical purpose indicated and the aims specified are achieved by an automated hooking device for lift trucks comprising a plate, designed to be fixed to a lift truck, and a coupling arm hinged or which can be hinged to the plate and movable between an operating configuration and a rest configuration.

The term "operating configuration" means a configuration wherein the coupling arm is transversal to the plate and connectable to a trailer.

The term "rest configuration" means a configuration wherein the coupling arm is parallel to the plate.

The device also comprises an actuator operatively connected to the coupling arm and a control unit configured for sending a control signal to the actuator for moving the coupling arm between the rest configuration and the operating configuration.

According to an aspect of the invention, the proposed hooking device allows the automated opening and closing of the coupling arm remotely by means of a user interface unit located inside a cabin of the lift truck and connected or connectable to the control unit.

In particular, the hooking device allows the possibility of recalling the coupling arm and therefore reducing the overall dimensions during the rest configuration of the lift truck.

According to a possible embodiment, the actuator is also able to move and position the coupling arm in different angular positions. The angular positions which may be adopted by the coupling arm are between the operating configuration and the rest configuration.

According to an aspect of the invention, the hooking device is also provided with a sensor which is able to detect an angular position between the rest configuration and the operating configuration of the coupling arm. In particular, the sensor makes it possible to precisely know the position of the coupling arm in such a way as to confirm the closing of the coupling arm or check that it is actually being used.

The sending of the control signal through the control unit allows the actuator to be activated for moving the arm from the rest configuration to the operating configuration and vice versa.

According to an aspect of the invention, the confirmation of the correct closing of the coupling arm, and, therefore, the passage to the rest configuration, is confirmed by a signal transmitted by the sensor to the control unit which will thereby interrupt the sending of the control signal. According to an aspect of this invention, if the coupling arm is in the operating configuration, the sensor will send the information to the control unit which will therefore automatically adjust the speed of the lift truck. Preferably, when the coupling arm is in the operating configuration the control unit sets a maximum speed which can be reached by the lift truck. Advantageously, the hooking device prevents manual intervention by an operator on the hooking device, reducing the dimensions of the lift truck in the rest configuration and setting its speed in the operating configuration, and also increasing its safety and reliability.

Further features and advantages of the invention are more apparent in the non-limiting description which follows of a non-exclusive embodiment of a lift truck comprising a hooking device. The description is set out below with reference to the accompanying drawings which are provided solely for purposes of illustration without restricting the scope of the invention and in which:
- Figure 1 is a perspective view of the frame of a lift truck comprising the hooking device in the operating configuration.
- Figure 2 is a perspective view of the frame of a lift truck comprising the hooking device in the rest configuration.

With reference to the accompanying drawings, the numeral 100 denotes in its entirety a lift truck and the numeral 1 denotes an automated hooking device for lift trucks which, for simplicity of description, will hereafter be referred to as the hooking device 1.

The hooking device 1 is configured for reversible connection between a lift truck 100 and a trailer.

In other words, the lift truck 100 comprises a device 1 for attaching the trailer.

The term "trailer" means a vehicle without a motor configured for being towed. For example, the trailer can be made for transporting materials. The trailer comprises at least one pair of driven wheels. Optionally, the trailer comprises a braking system of the driven wheels.

The lift truck 100 comprises in a simplified fashion a tractor unit which consists of a motor unit, at least a first pair of wheels and a second pair of wheels.

The first pair of wheels is front and the second pair of wheels is rear. Preferably, the first pair of wheels is a pair of steering idle wheels. Preferably, the second pair of wheels is a pair of drive wheels. The tractor unit comprises a rear axle connected to the second pair of rear wheels. The tractor unit comprises a braking system for the second pair of wheels. The lift truck 100, further comprising a main frame defining a front portion and a rear portion 101.

The hooking device 1 according to the invention in turn comprises a plate 2 designed to be fixed to the lift truck 100 and a coupling arm 3 connected or connectable to the plate 2.

In particular, the plate 2 guarantees the fixing of the hooking device 1 to the rear portion 101 of the main frame of the lift truck 100.

The plate 2 may be held adherent to the lift truck 100 by means of different fixing and/or anchoring elements such as, for example, clamping and/or screwing elements.

The plate 2 guarantees a correct fixing and an increased stability for the lift truck 100 so as to prevent the relative movement between the plate 2 and the lift truck 100. The anchoring systems must in turn guarantee good fatigue resistance and high failure resistance since they are subjected to various operating cycles and different towing loads.

Advantageously, the plate 2 has different holes which are useful for being able to fix the hooking device 1 in different positions, inclinations and angles with respect to the lift truck 100 depending on the structure and the function of the lift truck 100.

According to a possible embodiment of the hooking device 1, the connection between the plate 2 and the coupling arm 3 is performed by a hinge 5.

The coupling arm 3 which is hinged or can be hinged to the plate 2 can rotate by approximately 90° about the axis of the hinge 6 passing between an operating configuration and a rest configuration.

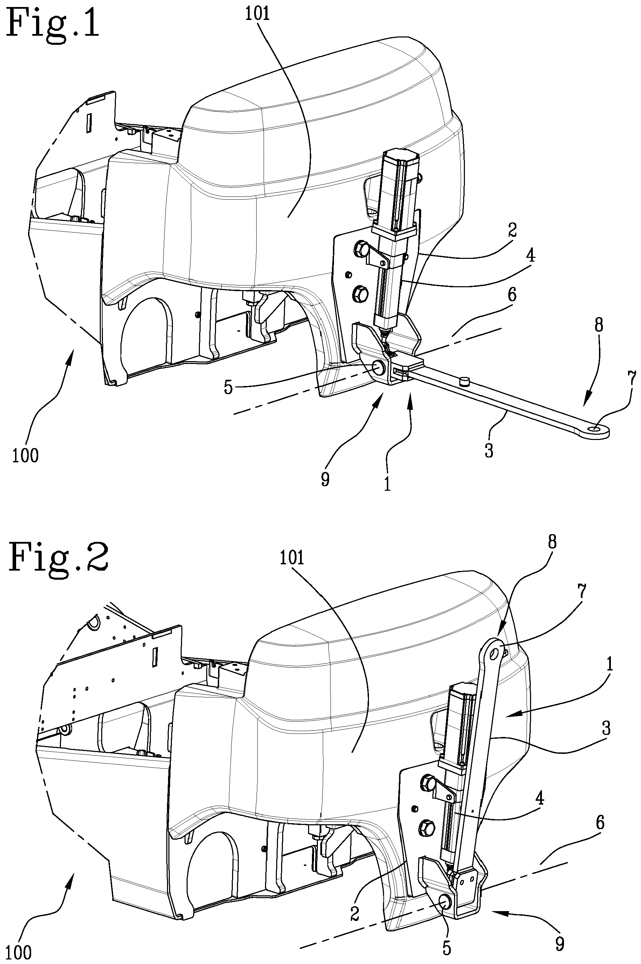

In the operating configuration, as shown in Figure 1, the coupling arm 3 is transversal to the plate 2 and connectable to a lift truck 100. For this reason, again with reference to Figure 1, the coupling arm 3 is substantially parallel to a supporting surface of the lift truck 100, such as, for example, the ground or the road surface on which the lift truck 100 moves.

According to this operating configuration the coupling arm 3 is coupled or can be coupled to a trailer.

In the rest configuration, as shown in Figure 2, the coupling arm 3 is parallel to the plate 2.

If the plate 2 had a predetermined thickness, in the rest configuration, the coupling arm 3 would be insertable in a seat made in the plate 2. In other words, in the rest configuration, the coupling arm 3 may be positioned flush with the plate 2.

In Figure 2, the coupling arm 3 is spaced from the plate 2 at a preset distance or depending on the sizing of the hinge 5.

Advantageously, according to the mechanism just described, the coupling arm 3 is reclosable, that is to say, it can be opened only when necessary and reclosed when it is not used.

The dimensions of the lift truck 100, therefore, are considerably reduced during the rest configuration of the coupling arm 3.

Advantageously, the coupling arm 3, as shown in Figure 1, at the end opposite the hinge 5, that is to say, the part most distal relative to the lift truck 100, has a seat 7 designed for attaching a trailer. In other words, the coupling arm 3 comprises an operating end 8, opposite a connecting end 9 wherein the coupling arm 3 is connected to the hinge 5, made in the form of a seat 7 designed to receive a hook of a trailer.

According to other possible embodiments not shown in the drawings, in the above-mentioned most distal part there is a hook, inserted or insertable in at least one of the holes of the trailer. In other words, the coupling arm 3 comprises an operating end 8 made in the form of a pin or a tow hitch designed to be inserted in a seat of a trailer.

The coupling can be of various types, for example spherical or hook shaped.

The spherical hook is characterised by a ball-shaped junction part with the trailer.

The hook-shaped coupling, compared with the ball coupling, has an element which reduces the possibility of accidental release of the trailer and is used mainly for trailers with a ring/loop connection.

These mechanical connections allow the correct movement of the lift truck 100 and the safe transport of the trailer attached to it.

The attachment device 1 also comprises an actuator 4 operatively connected to the coupling arm 3. In other words, the actuator 4 is designed to move the coupling arm 3 between the operating configuration and the rest configuration. For this reason, the actuator 4 allows a rotation of the coupling arm 3 relative to the hinge 5 with which the coupling arm 3 is hinged to the plate 2.

Preferably, the actuator 4 is configured for moving and positioning the coupling arm 3 in different angular positions included between the operating configuration and the rest configuration.

According to an embodiment of the hooking device 1, the actuator 4 is made in the form of a hydraulic actuator.

Alternatively, the actuator 4 may be made in the form of a pneumatic actuator or an electric actuator.

The attachment device 1 also comprises a control unit configured for sending a control signal to the actuator 4 for moving the coupling arm 3 between the rest configuration and the operating configuration.

In particular, the control unit is configured for sending the control signal when requested by a user.

For this reason, the actuator 4 is not only operatively connected to the coupling arm 3 but it is in turn in communication with the control unit.

The actuator 4 and the control unit are therefore connected to each other by electrical connections or by wireless communication.

Preferably, the control unit and the actuator 4 may be integrated or separate from each other.

After receiving the control signal, the actuator 4 moves the coupling arm 3 between the rest configuration and the operating configuration.

Advantageously, the control unit in common with the actuator 4 allows an automated remote movement of the coupling arm 3 to be performed, thereby allowing the overall dimensions to be reduced when it is not necessary to hook a trailer to the lift truck 100.

According to a further embodiment of the hooking device 1, it also comprises at least one sensor. The sensor is configured for detecting an angular position of the coupling arm 3 between the operating configuration and the rest configuration. In other words, the sensor allows a position of the coupling arm 3 to be known, including the position coinciding with the operating configuration and the position coinciding with the rest configuration and all the intermediate positions.

In the case in question, the sensor is designed to send a position signal to the control unit. The position signal therefore identifies one of the above-mentioned positions in such a way as to make the control unit aware with precision of the position of the coupling arm 3.

According to an aspect of the invention, the control unit is configured to control a speed of travel of the lift truck 100 as a function of the above-mentioned position signal.

Preferably, the control unit is configured to reduce a speed of travel of the lift truck 100 if, from the position signal, it is shown that the coupling arm 3 is in the operating configuration. In other words, if the coupling arm 3 is in the lowered position, the sensor is configured for communicating the position to the control unit which will therefore identify the position as an operating condition of the hooking device 1. This communication occurs both if a trailer is actually attached to the lift truck 100 and if the trailer is not present.

Preferably, the control unit is configured for setting a maximum forward speed of the lift truck 100 if the position signal indicates that the coupling arm 3 is in the operating configuration.

Similarly to what is stated above, the maximum speed is set both if a trailer is actually attached to the lift truck 100 and if it is absent.

In light of the above, if the coupling arm 3 is in the operating configuration, the control unit will be configured for adjusting the speed of the lift truck 100 in such a way as to improve the stability and the manoeuvrability.

In particular, the control unit will keep the lift truck 100 at a speed lower than the set maximum speed or, if it exceeds the set maximum speed, it will return the travel of the lift truck 100 below the set maximum speed.

In this way, advantageously, the general safety during a driving of the lift truck 100 is improved, in particular when the trailer is coupled to the vehicle.

According to another aspect of the invention, the sensor is configured to send a signal of correct closing of the coupling arm 3 to the control unit when it detects that the coupling arm 3 has passed from the operating configuration to the rest configuration.

In other words, once the passage from the operating configuration to the rest configuration has been completed, the signal of correct closing of the coupling arm 3 is sent to the control unit which will therefore interrupt the operation of the actuator 4. Moreover, said communication of correct closing (coinciding with the detection of the position of the coupling arm 3 coinciding with the rest configuration) will interrupt the adjustment of the speed as described above.

For this reason, when the coupling arm 3 is no longer in the operating configuration or in one of the intermediate positions, the control unit interrupts the control of the speed since the control arm is no longer connected to a trailer or in any case no longer causes obstructions.

The lift truck 100 comprises a user interface unit connected or connectable to the control unit of the hooking device 1.

The interface unit, located preferably on a panel of the lift truck 100, has commands which can be actuated by a user for sending the control signal from the control unit to the actuator 4 of the hooking device 1 in such a way as to move the coupling arm 3 between the operating configuration and the rest configuration.

In this way, the user is able to move as required the coupling arm 3 between the rest configuration, the operating configuration or, as necessary, to one of the intermediate positions.

According to an embodiment, the control unit is integrated or can be integrated with the user interface unit or in any case able to communicate via cable or via wireless with the user interface unit.

Preferably, the control unit is integrated or can be integrated with a control unit of the lift truck 100, that is to say, it is defined by one or more components of the control unit of the lift truck 100 and connected or connectable to the actuator 4 for controlling the coupling arm 3.

For this reason, the control unit is also able to send specific commands for certain functions of the control unit such as, for example, the control of the speed.

The control unit is configured to establish the reference speed on the basis of the relative angular position of the tractor unit with respect to the trailer. Based on the reference speed determined by the control unit, the control unit is configured for controlling an acceleration or a deceleration at least of a pair of drive wheels of the tractor unit by means of respective transmission means.

If the trailer comprises the braking system of the driven wheels, the control unit is configured for establishing a distribution of braking between the braking system of the tractor unit and the braking system of the trailer. The control unit is configured to receive and process data acquired and/or entered from the outside, for example the condition of adherence of the tractor unit to the ground.

The condition of adherence of the tractor unit to the ground is determined by the conditions of the ground, for example dry or wet or with ice, and by the type of ground, for example asphalt or cement.

This data may be entered by the driver of the lift truck 100 or sent to the control unit by electronic units inside or outside the control unit.

The control unit is designed to receive a plurality of data indicating the tractor unit and the trailer.

The data indicating the tractor unit and the trailer are, for example, the weight of the tractor, the coordinates of the centre of gravity, the main geometrical dimensions, such as position of the hooking device 1, and dimensions of the trailer.

According to the invention, the tractor unit may comprise at least a first sensor positioned at the rear axle configured for detecting a data item indicating a load positioned on the tractor unit and/or on the trailer.

The tractor unit comprises a second sensor configured for measuring a second data item D2 indicating a steering angle of at least one wheel of the tractor unit.

By way of a non-limiting example, the second sensor is in the form of a potentiometer.

The tractor unit may comprise a third sensor configured for detecting a third data item indicating the inclination of the tractor unit with respect to a horizontal direction.

By way of a non-limiting example, the third sensor is in the form of an inclinometer.

The tractor unit may also comprise a fourth sensor configured for measuring the number of revolutions of the motor unit, and a fifth sensor configured for measuring the torque generated by the motor unit and a time counter.

By way of a non-limiting example, the fourth sensor is in the form of an encoder.

The control unit is configured to determine the value of a traction force by the tractor unit on the basis of data indicating the tractor unit and the number of revolutions measured by the fourth sensor, by the value of the torque measured by the fifth sensor and by the time counter.

The control unit is configured for estimating the value of a load supported by the trailer using the data emitted by the first sensor.

Advantageously, this invention is capable of overcoming the disadvantages of the prior art.

Advantageously, the actuator 4 and the control unit allow an automated movement of the coupling arm 3 between the different configurations described.

Advantageously, the control unit allows the actuator 4 and therefore the coupling arm 3 to be remotely controlled in such a way as to prevent direct intervention of a user.

Moreover, the possibility of moving the coupling arm 3 to the rest configuration considerably allows the overall dimensions to be reduced especially during the operating operations.

Advantageously, according to the embodiment in which the control unit is able to control the speed of the lift truck 100, the presence of the sensor allows the speeds of the lift truck 100 to be reduced in an effective manner or, in any case, set so as to have safe driving in which possible jerking of the trailer due to high speeds is prevented.

## Claims

1. An industrial work vehicle (100), preferably a lift truck, comprising:
- a tractor unit consisting of a motor unit;
- a main frame defining a front portion and a rear portion (101) of said lift truck (100);
- an automated hooking device (1) comprising:
- a plate (2), designed for fixing said hooking device (1) to said rear portion (101) of said main frame,
- a coupling arm (3) hinged or which can be hinged to said plate (2) and movable between a rest configuration wherein said coupling arm (3) is parallel to said plate (2) and an operating configuration wherein said coupling arm (3) is transversal to said plate (2) and connectable to a trailer, and
- an actuator (4) operatively connected to said coupling arm (3);
said lift truck (100) also comprising a control unit configured for sending a control signal to said actuator (4) for moving said coupling arm (3) between said rest configuration and said operating configuration.

2. The industrial work vehicle (100) according to claim 1, comprising at least one sensor configured for detecting an angular position of said coupling arm (3) between said operating configuration and said rest configuration and sending a position signal, representing an angular position of said coupling arm (3), to said control unit.

3. The industrial work vehicle (100) according to claim 2, wherein said control unit is configured to control a forward speed of the lift truck (100) as a function of said position signal.

4. The industrial work vehicle (100) according to claim 2 or 3, wherein said control unit is configured for reducing a forward speed of the lift truck (100) if said position signal indicates said coupling arm (3) is in said operating configuration.

5. The industrial work vehicle (100) according to any one of claims 2 to 4, wherein said control unit is configured for setting a maximum forward speed of the lift truck (100) if said position signal indicates that said coupling arm (3) is in said operating configuration.

6. The industrial work vehicle (100) according to any one of claims 2 to 5, wherein said at least one sensor is configured for sending a signal for correct closing of said coupling arm (3) to said control unit when it detects that said coupling arm (3) has passed from the operating configuration to the rest configuration.

7. The industrial work vehicle (100) according to any one of the preceding claims, wherein said actuator (4) is configured for moving and positioning said coupling arm (3) in different angular positions included between said operating configuration and said rest configuration.

8. The industrial work vehicle (100) according to any one of the preceding claims, wherein said actuator (4) is made in the form of a hydraulic, pneumatic or electric actuator.

9. The industrial work vehicle (100) according to any one of the preceding claims, wherein said coupling arm (3) comprises an operating end (8) made in the form of a pin or a tow hitch designed to be inserted in a seat of a trailer.

10. The industrial work vehicle (100) according to any one of claims 1 to 8, wherein said coupling arm (3) comprises an operating end (8) made in the form of a seat 7 designed to receive a hook of a trailer.

11. The industrial work vehicle (100) according to any one of the preceding claims, wherein said control unit is connected or connectable to a user interface unit comprising commands which can be actuated by a user for sending said control signal from said control unit to said actuator (4) of the hooking device (1) in such a way as to move said coupling arm (3) between the operating configuration and the rest configuration.
